# EUROPÄISCHE PATENTSCHRIFT

(11) **EP 1 663 780 B1**
(45) Veröffentlichungstag und Bekanntmachung des Hinweises auf die Patenterteilung: **16.04.2008**
(21) Anmeldenummer: 04763938.0
(22) Anmeldetag: 10.08.2004
(51) Int. Cl.: B64D 11/06, B60P 7/08

(54) **SITZBEFESTIGUNGSSYSTEM**
SEAT SECURING SYSTEM
SYSTEME DE FIXATION DE SIEGE

(30) Priorität: 10.09.2003 DE 10341624
(43) Veröffentlichungstag der Anmeldung: 07.06.2006
(73) Patentinhaber: Recaro Aircraft Seating GmbH & Co. KG, 74523 Schwäbisch Hall (DE)
(72) Erfinder: FREY, Andreas, 88090 Immenstaad (DE)
(74) Vertreter: Daub, Thomas
(86) Internationale Anmeldenummer: PCT/EP2004/008918
(87) Internationale Veröffentlichungsnummer: WO 2005/028306

(56) Entgegenhaltungen:
- DE-U- 29 902 465
- US-A- 4 396 175
- US-A- 5 871 318
- US-B1- 6 299 230

## Beschreibung

Die Erfindung betrifft ein Sitzbefestigungssystem, insbesondere zum Befestigen von Fluggastsitzen an einem Boden eines Luftfahrzeuges gemäß der Merkmalsausgestaltung des Oberbegriffes des Patentanspruches 1.

Dahingehende Sitzbefestigungssysteme dienen dazu, Fluggastsitze in einem vorgebbaren Aufstellungsmuster mit vorgebbaren Abständen in Längsrichtung des Flugzeuges gesehen anzuordnen und dergestalt eine Flugzeugkabine zu bestuhlen. Dabei laufen mehrreihig nebeneinander in Längsrichtung des Flugzeugrumpfes mehrere Befestigungsschienen im Boden der Kabine. Regelmäßig wird dabei ein Fluggastsitz oder eine Reihe nebeneinander angeordneter Fluggastsitze als Sitzeinheit m it ihren Ständerfüßen an den Befestigungsschienen nach dem vorgebbaren Bestuhlungsmuster fest angelenkt, wobei in Längsrichtung der Ständerfüße zwei Paare an Fußteilen an zwei parallel nebeneinander liegenden Befestigungsschienen mittels sog. Grundkörper lösbar festgelegt werden.

Bei den bekannten Lösungen an Sitzbefestigungssystemen, wie sie auf dem Markt frei zu erhalten sind, weist ein Grundkörper ein Aufsetzteil zum Aufsetzen auf die Befestigungsschiene auf sowie an seiner der Befestigungsschiene gegenüberliegenden Oberseite ein Festlegeauge auf zum Fixieren eines Befestigungsbolzens des jeweiligen Ständerfußes für den Fluggastsitz. Auf seiner der Befestigungsschiene zugewandten Seite weist der Grundkörper paarweise in Längsrichtung gegenüberliegende Rastteile mit tellerkreisförmigem Querschnitt auf, die in Längsrichtung des Grundkörpers voneinander beabstandet paßgenau in Eingriff bringbar sind mit den Durchtrittsöffnungen der Befestigungsschiene. Dergestalt läßt sich der Grundkörper mit seinen Rastteilen teilweise in die Durchtrittsöffnungen einsetzen und durch Längsverschieben des Grundkörpers gegenüber der festgelegten Befestigungsschiene um einen Rasterabstand an Durchtrittsöffnungen gelangen die Rastteile in untergreifende Anlage mit den freien Profilflanken der hohlprofilartigen Befestigungsschiene. Auf der gegenüberliegenden Seite weist die bekannte Lösung eine stegartige Verbreiterung an dem Grundkörper auf, wobei sich die dahingehende Verbreiterung an der Oberseite der Profilflanken der Befestigungsschiene abstützt und eine zwischen den beiden Paaren an Rastteilen des Grundkörpers angeordnete Durchtrittsöffnung übergreift.

Bei den bekannten Lösungen weist dann der jeweilige Grundkörper ein Auf setzteil auf, das man in der Fachsprache auch mit "Plunger" bezeichnet, das mittels einer Festlegeeinrichtung des Grundkörpers quer zur Längsverfahrbarkeit desselben auf und ab bewegbar ist, wobei in der abgesenkten Stellung weitere Rastteile des Aufsetzteils in die zuordenbaren Durchtrittsöffnungen der Profilschiene paßgenau eingreifen und dergestalt in Längsrichtung das Aufsetzteil in seiner Lage auf der Befestigungsschiene sichern, das ansonsten gegen vertikales Abheben durch die Rastteile gesichert ist, die die freien Profilflanken der Befestigungsschiene untergreifen. Durch Anziehen eines Befestigungsmittels der Festlegeeinrichtung werden dann zum einen definitiv die weiteren Rastteile des Aufsetzteils (Plunger) in ihrer Lage an der Befestigungsschiene fixiert und im übrigen die sonstigen Rastteile des Grundkörpers gegen die Profilflanken der hohlkammerartigen Befestigungsschiene verspannt, so dass sowohl in axialer als auch in radialer Richtung ein sicherer Halt des Grundkörpers an der Befestigungsschiene erreicht ist.

Dergestalt ist auch eine sichere Ableitung von Crash-Kräften, die auf den Fluggastsitz einwirken können, in die Bodenstruktur der Flugzeugkabine mit ihren Befestigungsschienen erreicht. Nachteilig bei der bekannten Lösung ist der sich in der Praxis ergebende erhöhte Montageaufwand und die bestehenden Systeme sind nicht für einen häufigen Ein- oder Umbau geeignet.

Durch die U.S. 3,241,501 ist ein Sitzbefestigungssystem bekannt, bei dem die Rastteile eines Grundkörpers ohne weitere Relativbewegung entlang der Längsrichtung der Befestigungsschiene in Eingriff bringbar sind mit den zuordenbaren Ausnehmungen innerhalb zweier benachbarter Profilflanken des Hohlprofiles als Befestigungsschiene. Mit diesem Grundkörper starr verbunden, ist ein plattenartiges Aufsetzteil, das an seiner Unterseite mit weiteren Rastteilen versehen ist, die in einem vorgebbaren Rastermaß in der Befestigungsschiene sich im freien Eintrittsquerschnitt verbreiternde Durchtrittsöffnungen durchgreifen. Ein mittig angeordnetes weiteres Rastteil, als Bestandteil eines Betätigungszapfens, ist zwischen den beiden anderen Rastteilen des Grundkörpers über eine Griffschlaufe axial längs verschiebbar im Grundkörper geführt und entgegen der Federkraft einer Druckfeder aus einer Grundstellung, bei der das mittlere weitere Rastteil in Eingriff ist mit der ihm zuordenbaren Durchtrittsöffnung in eine Betätigungsstellung herausziehbar, bei der ein Ritzel des Betätigungszapfens in Eingriff kommt mit Ritzeln der benachbart angeordneten Rastteile des Grundkörpers.

Wird nun die Griffschlaufe von Hand um 90° verschwenkt, wird der aufgezeigte Ritzelantrieb betätigt und die Rastteile des Grundkörpers werden über diesen Ritzeltrieb in eine Verriegelungsstellung quer zur Längsrichtung der Befestigungsschiene verschwenkt, bei der konisch zulaufende Fußteile der Rastteile die jeweiligen Profilflanken des Hohlprofiles als Befestigungsschiene untergreifen. In der dahingehenden Verriegelungsstellung sind dann zumindest die außenseitig angeordneten weiteren Rastteile des Aufsetzteiles in Eingriff mit den Durchtrittsöffnungen verbreiterten Querschnitts. Ein Lösevorgang des Sitzbefestigungssystems von der zuordenbaren Befestigungsschiene ist entsprechend in umgekehrter Reihenfolge wie beschrieben möglich. Obwohl diese bekannte Lösung den Vorteil hat, dass ohne weitere Längsverschiebung in Längsrichtung der Befestigungsschiene das Befestigungssystem direkt auf der Schiene festlegbar ist, ist für den eigentlichen Verriegelungsvorgang das Verschwenken der Rastteile des Grundkörpers um 90° aus der Ausgangsstellung heraus notwendig, so dass es dergestalt zu Hemmnissen im Betrieb kommen oder gar zu einer Beschädigung der relativ empfindlichen Profilflanken des Hohlprofils, insbesondere wenn dieses aus Gewichtsgründen aus Leichtmetallwerkstoffen aufgebaut sein sollte.

Durch das DE 299 02 465 U ist ein gattungsgemäßes Sitzbefestigungssystem bekannt mit mindestens einer Befestigungsschiene, die in der Art eines Hohlprofils ausgebildet ist, das an seiner dem Fluggastsitz zugewandten Oberseite mit einem von den freien Endprofilflanken des Hohlprofils begrenzten Längskanal versehen ist, der in Längsrichtung der Befestigungsschiene in einem vorgebbaren Rastermaß seinen freien Eintrittsquerschnitt verbreiternde Durchtrittsöffnungen aufweist, die dem Durchgriff von in Reihe hintereinander angeordneten und voneinander beabstandeten Rastteilen eines Grundkörpers dienen, wobei das Abstandsmaß der Rastteile des Grundkörpers dem Abstandsmaß der Durchtrittsöffnungen angepaßt ist, wobei bei einer Relativbewegung der Rastteile gegenüber den Durchtrittsöffnungen entlang der Längsrichtung der Befestigungsschiene die Rastteile in Anlage bringbar sind mit den Profilflanken des Hohlprofils, wobei neben dem Grundkörper als weitere Komponente ein Aufsetzteil zum Aufsetzen auf die Befestigungsschiene vorhanden ist, das für einen Eingriff mit den zuordenbaren Durchtrittsöffnungen weitere Rastteile aufweist, wobei in einer Relativbewegung zwischen dem Aufsetzteil und dem Grundkörper diese quer zur Längsrichtung der Befestigungsschiene in eine Festlegestellung verfahrbar sind, und wobei in der Festlegestellung ein von einer Freigabestellung in eine Verriegelungsstellung schwenkbarer, unter der Wirkung eines Kraftspeichers stehender Verriegelungskörper die jeweiligen Rastteile und mithin Grundkörper und Aufsetzteil an der Befestigungsschiene festlegt.

Ausgehend von diesem Stand der Technik liegt der Erfindung die Aufgabe zugrunde, die bekannten Sitzbefestigungssysteme dahingehend weiter zu verbessern, dass sie sich kostengünstig realisieren und einfach und funktionssicher montieren lassen bei gleichzeitiger Erhöhung des Sitzkomforts für einen derart festgelegten Sitz an einem Kabinenboden. Eine dahingehende Aufgabe löst ein Sitzbefestigungssystem mit den Merkmalen des Patentanspruches 1 in seiner Gesamtheit.

Dadurch, dass gemäß dem kennzeichnenden Teil des Patentanspruches 1 der Verriegelungskörper einen im Grundkörper mittels eines Einstellzapfens schwenkbaren Keil aufweist, der in der Freigabestellung in eine Keilnut des Aufsetzteils eingreift und in der Verriegelungsstellung quer dazu die die Keilnut randseitig begrenzenden Anlagewände übergreift, sind die bestehenden Systeme dahingehend weiter verbessert, dass sich der Montageaufwand vor Ort reduzieren läßt und insbesondere bei häufigen Ein- und Umbaumaßnahmen treten die Vorteile des erfindungsgemäßen Systems zu Tage. Über einen einfachen Schwenkvorgang des Verriegelungskörpers in Form des mittels des Einstellzapfens schwenkbaren Keils läßt sich eine sichere mechanische Verriegelung zwischen dem aus Grundkörper und Aufsetzteil gebildeten Beschlag an der Befestigungsschiene herbeiführen, wobei unter dem Einfluß des Kraftspeichers nicht nur eine form- sondern auch eine reibschlüssige Verbindung dergestalt zwischen Beschlag und Befestigungsschiene erhalten ist. Der angesprochene Kraftspeicher erlaubt den Ausgleich von Toleranzen, so dass der Beschlag immer fest an der Schiene anliegt. Somit erlaubt das erfindungsgemäße Sitzbefestigungssystem die Verwirklichung der sog. Anti-Rattle-Funktion. Ein weiterer Vorteil des erfindungsgemäßen Sitzbefestigungssystems liegt darin, dass mit geringen Betätigungskräften und Material schonend sich immer genau definierte Festlege- und Lösemöglichkeiten für das Bedienpersonal ergeben.

Weitere vorteilhafte Ausführungsformen des erfindungsgemäßen Sitzbefestigungssystems sind Gegenstand der sonstigen Unteransprüche.

Im folgenden wird das erfindungsgemäße Sitzsystem anhand eines Ausführungsbeispiels nach der Zeichnung näher erläutert.

Dabei zeigen in prinzipieller und nicht maßstäblicher Darstellung die
- Fig.1: eine perspektivische Draufsicht auf einen Teil des Sitzbefestigungssystems in der Verriegelungsstellung;
- Fig.2: einen Längsschnitt durch den Gegenstand nach der Fig.1, jedoch in nicht verriegelter Freigabestellung;
- Fig.3 und 4: im Teilschnitt eine perspektivische Ansicht betrachtet von der Rückseite nach der Fig.1, einmal in der Freigabe-, einmal in der Verriegel ungsstel lung;
- Fig. 5: eine der Fig.3 entsprechende rückwärtige Schnittdarstellung mit in einer Befestigungsschiene eingesetztem Beschlag, im wesentlichen bestehend aus einem Grundkörper und dem Aufsetzteil (nicht verriegelt).

Das erfindungsgemäße Sitzbefestigungssystem gemäß den Darstellungen nach den Figuren dient insbesondere dem Befestigen von Fluggastsitzen (nicht dargestellt) an einem Boden (Kabinenboden) eines Luftfahrzeuges. Das dahingehende Sitzbefestigungssystem läßt sich aber auch gegebenenfalls in anderen Bereichen einsetzen, beispielsweise im Bereich von Fahrzeugen, wie Reisebussen, Schiffsfähren, od. dgl.; kann aber auch Verwendung finden im Rahmen einer Saalbestuhlung, beispielsweise für eine Kongreßhalle, einen Theatersaal od. dgl..

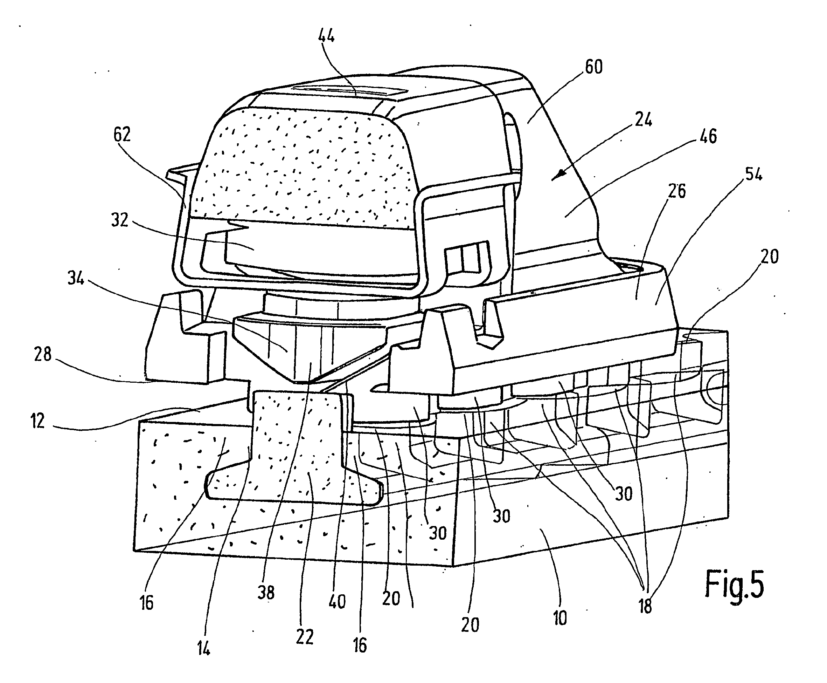

Das Sitzbefestigungssystem weist eine Befestigungsschiene 10 auf (vgl. Fig.5), die in der Art eines Hohlprofils ausgebildet ist. Mehrere dahingehende Befestigungsschienen 10 verlaufen vorzugsweise in Längsrichtung des Kabinenbodens eines Luftfahrzeuges, wobei die jeweilige Befestigungsschiene 10 mit ihrer Oberseite 12 vorzugsweise bündig im Kabinenboden eines Luftfahrzeuges integriert ist. Die Oberseite 12 einer jeden Befestigungsschiene 10 geht somit bündig in die Oberseite des Kabinenbodens über. Zwei oder mehrere parallel zueinander verlaufende Befestigungsschienen 10 dienen dann dem Aufstuhlen an Fluggastsitzen innerhalb der Flugzeugkabine, wobei ein einzelner Fluggastsitz oder mehrere in Reihe nebeneinander angeordnete Fluggastsitze als Gesamtheit sich mit den Befestigungsschienen 10 verbinden lassen.

Soll die jeweilige Flugzeugkabine dem Transport von Lasten dienen, besteht auch die Möglichkeit, die Bestuhlung wieder zu räumen und über das noch näher zu beschreibende Sitzbefestigungssystem lassen sich nicht nur Fluggastsitze an den Befestigungsschienen 10 anbringen, sondern Lasten auch dergestalt in der Kabine über die Befestigungsschienen 10 verzurren. Des weiteren kann das erfindungsgemäße Sitzbefestigungssystem dazu dienen, einen Fluggastsitz mit nur einem Ständerfuß zu befestigen oder, sofern die Aufständerkonstruktion des Sitzes über mehrere Stuhlbeine verfügt, diese im vorderen Bereich sowie im hinteren Bereich eines Sitzes dergestalt festzulegen.

Das genannte Hohlprofil einer Befestigungsschiene 10 begrenzt an seiner Oberseite 12 einen Längskanal 14, der von den beiden freien, einander zugewandten Profilflanken 16 des Hohlprofils begrenzt ist. Der dahingehende Längskanal 14 weist in einem vorgebbaren Rastermaß seinen freien Eintrittsquerschnitt verbreiternde Durchtrittsöffnungen 18 auf, wobei die Durchtrittsöffnungen 18 voneinander vorzugsweise einen gleichmäßigen Abstand aufweisen. Die Durchtrittsöffnungen 18 sind vorzugsweise in der Art von Bohrungen ausgebildet und münden mit benachbart gegenüberliegenden bogenförmigen Kreissegmenten 20 in die freien Enden der Profilflanken 16 ein.

Die Durchtrittsöffnungen 18 dienen dem Durchgriff von in Reihe hintereinander angeordneten und voneinander beabstandeten Rastteilen 22 eines als Ganzes mit 24 bezeichneten Grundkörpers. Das Abstandsmaß der Rastteile 22 des Grundkörpers 24 entspricht dabei dem Abstandsmaß der Durchtrittsöffnungen 18 innerhalb der Befestigungsschiene 10. Neben dem Grundkörper 24 ist als weitere Komponente ein Aufsetzteil 26 zum Aufsetzen auf die Befestigungsschiene 10 vorgesehen. Das Aufsetzteil 26 weist an seiner der Oberseite 12 der Befestigungsschiene 10 zugewandten Unterseite 28 weitere Rastteile 30 im selben Rastermaß auf wie die Rastteile 22 des Grundkörpers 24. In Abhängigkeit von der Bestückung mit Durchtrittsöffnungen 18 und deren Abstand voneinander, können die einzelnen Rastteile 22 bzw. 30 aber auch unterschiedliche Abstände zueinander aufweisen.

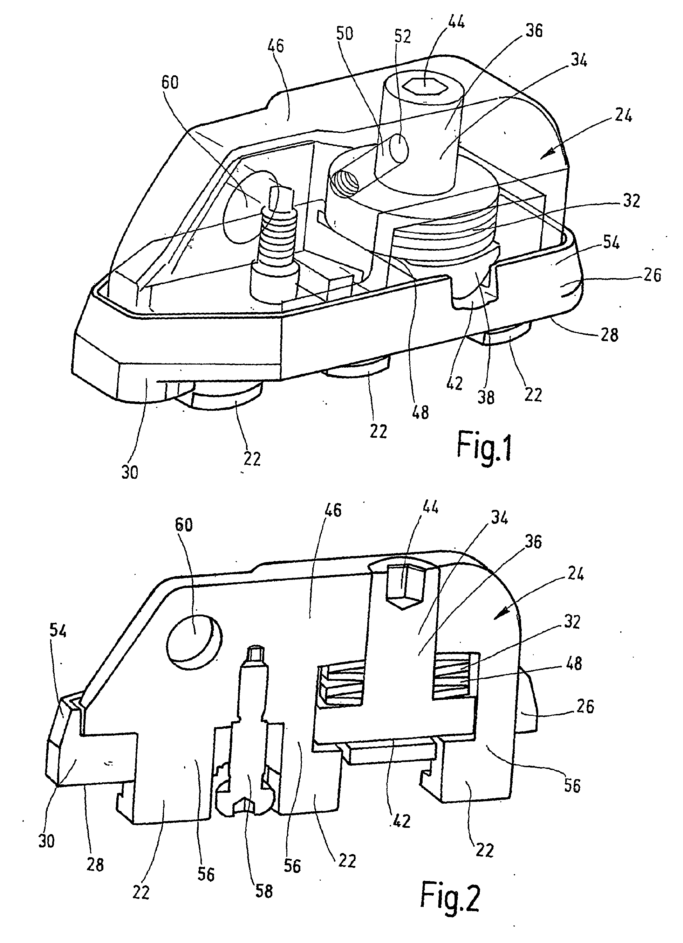

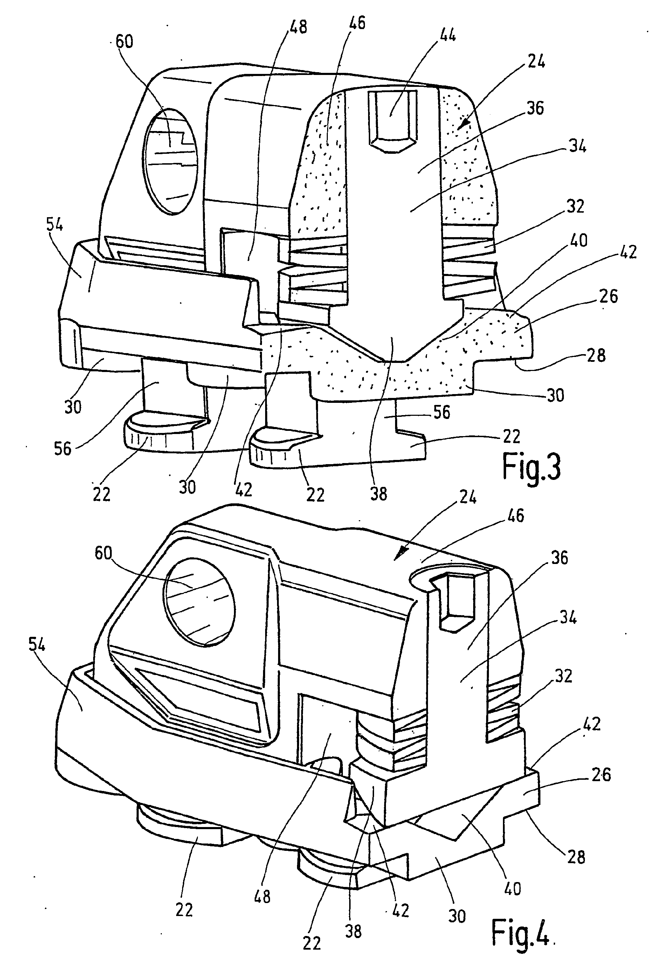

Wie sich des weiteren aus den Figuren ergibt, ist zumindest der Grundkörper 24 gegenüber dem Aufsetzteil 26 quer zur Längsrichtung der Befestigungsschiene 10 in eine Festlegestellung (vgl. Fig.1 und 4) verfahrbar, wobei in der Festlegestellung ein von einer Freigabestellung (vgl. Fig.3 und 5) in eine Verriegelungsstellung (vgl. Fig.1 und 4) schwenkbarer, unter der Wirkung eines Kraftspeichers 32 stehender Verriegelungskörper 34 die jeweiligen Rastteile 22,30 und mithin Grundkörper 24 und Aufsetzteil 26 an der Befestigungsschiene 10 festlegt.

Der Verriegelungskörper 34 weist einen im Grundkörper 24 mittels eines Einstellzapfens 36 schwenkbaren Keil 38 auf, der in der Freigabestellung in eine Keilnut 40 (Fig.3 und 5) des Aufsetzteils 26 eingreift und in der Verriegelungsstellung quer dazu die die Keilnut 40 randseitig begrenzenden Anlagewände 42 übergreift. Zum Betätigen des Einstellzapfens 36 dient an seinem oberen freien Ende eine Innensechskant-Ausnehmung 44. Mittels eines zugehörigen Innensechskantschlüssels läßt sich dergestalt durch Verschwenken um jeweils 90° in beiden Richtungen über den Einstellzapfen 36 der Keil 40 sich in seine Verriegelungs- oder entriegelnde Freigabestellung verschwenken.

Wie sich insbesondere aus der Fig.3 ergibt, ist in der Freigabestellung der Kraftspeicher 32 entspannt und erstreckt sich innerhalb der Gehäusewandung 46 in einer zugeordneten kammerartigen Aussparung 48 zwischen dem Keil 38 und eines Teils der Gehäusewandung 46, die in Blickrichtung auf die Figuren gesehen die obere Begrenzung der Aussparung 48 darstellt. Der genannte Kraft- oder Energiespeicher 32 besteht aus einem Tellerfederpaket mit zwei übereinander angeordneten Tellerfedern.

Wie sich des weiteren aus der Fig.1 ergibt, ist der Einstellzapfen 36 in der Verriegelungsstellung zusätzlich über eine Rastsicherung 50 lagefixiert. Für die dahingehende Rastsicherung 50 ist im Grundkörper 24 eine Querbohrung angeordnet, die eine Druckfeder aufnimmt (nicht dargestellt), die an ihrem einen freien Ende über eine Eindrehschraube (nicht dargestellt) gesichert ist und an ihrem anderen freien Ende ein Raststück aufweist, beispielsweise in Form einer Rastkugel (nicht dargestellt), die bei hergestellter Fixierung in eine zugeordnete schalenförmige Ausnehmung 52 am Außenumfang des zylindrischen Einstellzapfens 36 drückt.

Das Aufsetzteil 26 ist in der Art einer Anlageplatte ausgebildet, die mit einem Umfassungsrand 54 versehen dahingehend den Grundkörper 24 für die Relativbewegung zwischen ihm und dem Aufsetzteil 26 umfaßt. Die dahingehende Anlageplatte ist, wie dies insbesondere die Fig.2 verdeutlicht, von Stegen 56 des Grundkörpers 24 durchgriffen, an deren freien Enden das jeweilige Rastteil 22 angeordnet ist. Wie sich weiter aus der Fig.2 ergibt, sind das Aufsetzteil 26 und der Grundkörper 24 über eine Verliersicherung 58 miteinander gekoppelt, die mittels eines weiteren, nicht näher dargestellten Kraftspeichers, beispielsweise in Form einer Druckfeder versehen, in der Freigabestellung das Aufsetzteil 26 in Richtung des Grundkörpers 24 zu halten sucht. Die dahingehende Ausgestaltung erlaubt das freie Verschieben des Grundkörpers 24 zusammen mit dem Aufsetzteil 26 längs der Befestigungsschiene 10 zwecks Auswahl der Festlegeposition für den festzulegenden Sitz. Die Verliersicherung 58 weist hierfür eine Befestigungsschraube auf, die an einer Stelle zwischen den beiden vorderen Stegen 22 in die Unterseite des Grundkörpers 24 eingreift, und darüber hinaus durchgreift der dahingehende Schraubenbolzen der Verliersicherung 58 das Aufsetzteil 26 in diesem Bereich. Zwischen dem Schraubenkopf der Befestigungsschraube und der Unterseite des Aufsetzteils 26 ist dann die nicht näher dargestellte Druckfeder eingesetzt und drückt das Aufsetzteil 26 an die Unterseite des Grundkörpers 24. Die dahingehende Anlage entspricht dem nicht verriegelten Zustand für das Befestigungssystem oder Beschlagteil nach den Figuren. Des weiteren weist der Grundkörper an seiner dem Fluggastsitz zugewandten Oberseite ein Befestigungsauge 60 auf zum Festlegen der genannten Ständerteile des Fußgestells des jeweiligen Fluggastsitzes an einem Kabinen- oder Fahrzeugboden.

Alle Komponenten des Schienenbefestigungssystems sind vorzugsweise in Leichtbauweise, beispielsweise aus Stahl oder Titan, ausgeführt. Das vorstehend beschriebene Sitzbefestigungssystem mit mehreren Rastteilen 22,30, die paarweise einander gegenüberliegend mehrfach am Seitenrand des schienenförmigen Hohlprofils angeordnet sind, eignen sich besonders für die rückwärtige Befestigung des jeweiligen Ständerfußes eines Fahrzeug- oder Fluggastsitzes. Das dahingehende Sitzbefestigungssystem läßt sich aber auch im vorderen Bereich des jeweiligen Sitzes, also für einen zuvorderst angeordneten Sitzfuß, an dessen Befestigung an einem Kabinenboden einsetzen. Da im Crashfall für den vorderen Sitzfußbereich die Beanspruchung geringer ist als im rückwärtigen Bereich, genügt es, das vorstehend beschriebene Ausführungsbeispiel dann mit nur einem Paar gegenüberliegenden Rastteilen 22,30 an der Befestigungsschiene anzuordnen, so dass das dahingehend modifizierte Sitzbefestigungssystem (nicht dargestellt) in der Baulänge kürzer ausfallen kann.

Zum Festlegen des Sitzbefestigungssystems an der Befestigungsschiene 10 nimmt dieses seine nicht verriegelte Freigabestellung nach der Fig.3 ein und über die Stege 56 werden die Rastteile 22 in die zugeordneten Durchtrittsöffnungen 18 in den Längskanal 14 eingesetzt. Anschließend erfolgt durch Längsverschieben um ein halbes Rastermaß der Untergriff zwischen zwei benachbarten Durchtrittsöffnungen 18 in der Befestigungsschiene 10 an der Unterseite der Profilflanken 16 des Hohlprofils. Nunmehr wird über die Innensechskant-Ausnehmung 44 der Einstellzapfen 36 um 90° im Uhrzeigersinn verschwenkt, und zwar so lange, bis die Rastsicherung 50 in der Gehäusewandung 46 des Grundkörpers 24 greift, und dergestalt den Einstellzapfen 36 in der verschwenkten Verriegelungslage hält. Bei der dahingehenden Lage ist dann aber der Keil 38 aus seiner Freigabestellung in der Keilnut 40 um 90° in die Verriegelungsstellung nach der Fig.4 verschwenkt, bei der der Keil 38 auf den Anlagewänden 42 des Aufsetzteils 26 aufliegt.

In dieser Verriegelungsstellung wird dann das Aufsetzteil 26 entgegen der Wirkung des weiteren Kraftspeichers im Bereich der Verliersicherung 58 relativ zum Grundkörper 24 verschoben, und die weiteren Rastteile 30 greifen von oben her in die zugeordneten Durchtrittsöffnungen 18, so dass über die Rastteile 22 des Grundkörpers 24 eine Abhebsicherung aus der Profilschiene gewährleistet ist und die weiteren Rastteile 30 verhindern eine mögliche Längsverschiebebewegung in Längsrichtung der Befestigungsschiene 10. Da der Festlegevorgang unter dem Einfluß des Kraftspeichers 32 erfolgt, ist die Verriegelungsposition nicht nur formschlüssig, sondern auch reibschlüssig gegeben, und etwaig in die Befestigungsschiene eingeleitete Schwingungen, Stöße od. dgl. werden über den Kraftspeicher 32 in Form des Tellerfederpaketes gedämpft an den Grundkörper 24 weitergegeben und mithin an die Sitzstruktur des jeweils zu befestigenden Fluggastsitzes.

Ei n Lösevorgang erfolgt in umgekehrter Richtung, bei der der Keil 38 wiederum über den Eingriffszapfen 36 aus seiner in der Fig.4 gezeigten Verriegelungsstellung rückgeschwenkt wird in die Freigabestellung nach der Fig.3. Sollte eine Feder des Tellerfederpaketes als bevorzugte Ausführungsform des Kraftspeichers 32 brechen, ist dies unschädlich für die sichere Festlegung des Fluggastsitzes; jedoch geht die weitere Funktion als Dämpfungseinrichtung (Anti-Rattle-Funktion) verloren. Als zusätzliche Sicherungsmaßnahme kann gemäß der Darstellung nach der Fig.5 noch vorgesehen sein, das Tellerfederpaket in Ausgestaltung des Kraftspeichers 32 in einer Art Halteklammer 62 zu führen, die sich mit ihren Klammerenden am Grundkörper 24 abstützt. Es hat sich jedoch gezeigt, dass eine dahingehende Halteklammer 62 nicht zwingend notwendig ist.

Mit der erfindungsgemäßen Lösung ist es möglich, aufgrund der angesprochenen Gehäusekammerung sicherzustellen, dass das Kraftpaket, gebildet aus der Tellerfederanordnung, unverlierbar aufgenommen ist, auch wenn eine Tellerfeder des Verbundes durch mechanische Beschädigung ihrer Aufgabe nicht mehr nachkommen kann. Ist das Sitzbefestigungssystem in der gelösten, also im entriegelten Zustand, läßt es sich als Ganzes längs der Schiene verfahren und in vorgebbaren Stellungen festlegen. Dergestalt kann mit nur einem Handhabungsvorgang das Sitzbefestigungssystem an der Schiene sicher festgelegt und verspannt werden, so dass die sog. Anti-Rattle-Funktion erreicht ist. Vorzugsweise ist des weiteren vorgesehen, das Sitzbefestigungssystem mit einer Anzeigeeinrichtung dergestalt auszustatten, dass ein Monteur oder Wartungsfachmann von außen her ohne weiteres sehen kann, ob sich das Sitzbefestigungssystem im verriegelten Zustand, beispielsweise an der Schiene, befindet oder in der Freigabestellung. Vorzugsweise weist hierfür der schwenkbare und verriegelbare Keil 38 außenumfangsseitig in diametral einander gegenüberliegenden Stellungen Farbmarkierungen, beispielsweise rot und grün, auf, so dass bei einer verriegelten Stellung des Sitzbefestigungssystems, beispielsweise gemäß der Darstellung nach der Fig.1, dem Betrachter zugewandt der Keil 38 an seiner freien Stirnseite und entsprechend korrespondierend gegenüberliegend eine rote Farbmarkierung aufweist, wohingegen in der Freigabestellung, beispielsweise gemäß der Darstellung nach der Fig.3, dem jeweiligen Betrachter dann eine grüne Farbmarkierung zugewandt ist und weggeschwenkt die rote Farbmarkierung von Gehäuseteilen abgedeckt ist.

## Patentansprüche

1. Sitzbefestigungssystem, insbesondere zum Befestigen von Fluggastsitzen an einem Boden eines Luftfahrzeuges, mit mindestens einer Befestigungsschiene (10), die in der Art eines Hohlprofils ausgebildet ist, das an seiner dem Fluggastsitz zugewandten Oberseite (12) mit einem von den freien Profilflanken (16) des Hohlprofils begrenzten Längskanal (14) versehen ist, der in Längsrichtung der Befestigungsschiene (10) in einem vorgebbaren Rastermaß seinen freien Eintrittsquerschnitt verbreiternde Durchtrittsöffnungen (18) aufweist, wobei das Sitzbefestigungssystem einen Grundkörper (24) mit in Reihe hintereinander angeordneten und voneinander beabstandeten Rastteilen (22) aufweist, wobei das Abstandsmaß der Rastteile (22) des Grundkörpers (24) dem Abstandsmaß der Durchtrittsöffnungen (18) angepaßt ist, wobei bei einer Relativbewegung der Rastteile (22) gegenüber den Durchtrittsöffnungen (18) entlang der Längsrichtung der Befestigungsschiene (10), die Rastteile (22) in Anlage bringbar sind mit den Profilflanken (16) des Hohlprofils, wobei neben dem Grundkörper (24) als weitere Komponente ein Aufsetzteil (26) zum Aufsetzen auf die Befestigungsschiene (10) vorhanden ist, das für einen Eingriff mit den zuordenbaren Durchtrittsöffnungen (18) weitere Rastteile (30) aufweist, wobei in einer Relativbewegung zwischen dem Aufsetzteil (26) und dem Grundkörper (24) diese (24, 26) quer zur Längsrichtung der Befestigungsschiene (10) in eine Festlegestellung verfahrbar sind, und wobei in der Festlegestellung ein von einer Freigabestellung in eine Verriegelungsstellung schwenkbarer, unter der Wirkung eines Kraftspeichers (32) stehender Verriegelungskörper (34) die jeweiligen Rastteile (22,30) und mithin Grundkörper (24) und Aufsetzteil (26) an der Befestigungsschiene (10) festlegt, **dadurch gekennzeichnet, dass** der Verriegelungskörper (34) einen im Grundkörper (24) mittels eines Einstellzapfens (36) schwenkbaren Keil (38) aufweist, der in der Freigabestellung in eine Keilnut (40) des Aufsetzteils (26) eingreift und in der Verriegelungsstellung quer dazu die die Keilnut (40) randseitig begrenzenden Anlagewände (42) übergreift.

2. Sitzbefestigungssystem nach Anspruch 1, **dadurch gekennzeichnet, dass** in der Freigabestellung der Kraftspeicher (32) entspannt sich zwischen dem Keil (38) und einer Aussparung (48) im Grundkörper (24) erstreckt und dass beim Einnehmen der Verriegelungsstellung der Kraftspeicher (32) gespannt ist.

3. Sitzbefestigungssystem nach Anspruch 1 oder 2, **dadurch gekennzeichnet, dass** der Kraftspeicher (32) aus einem Tellerfederpaket besteht.

4. Sitzbefestigungssystem nach einem der Ansprüche 1 bis 3, **dadurch gekennzeichnet, dass** der Einstellzapfen (36) in der Verriegelungsstellung zusätzlich über eine Rastsicherung (50) lagefixiert ist.

5. Sitzbefestigungssystem nach einem der Ansprüche 1 bis 4, **dadurch gekennzeichnet, dass** das Aufsetzteil (26) in der Art einer Anlageplatte ausgebildet ist, die mit einem Umfassungsrand (54) versehen dahingehend den Grundkörper (24) für die Relativbewegung zwischen ihm und dem Aufsetzteil (26) umfaßt und dass die Anlageplatte auf ihrer der Befestigungsschiene (10) zugewandten Seite mit den weiteren Rastteilen (30) versehen ist.

6. Sitzbefestigungssystem nach Anspruch 5, **dadurch gekennzeichnet, dass** die Anlageplatte von Stegen (56) des Grundkörpers (24) durchgriffen ist, an deren freien Enden das jeweilige Rastteil (22) angeordnet ist.

7. Sitzbefestigungssystem nach einem der Ansprüche 1 bis 6, **dadurch gekennzeichnet, dass** das Aufsetzteil (26) und der Grundkörper (24) über eine Verliersicherung (58) miteinander gekoppelt sind, die mittels eines weiteren Kraftspeichers versehen in der Freigabestellung das Aufsetzteil (26) in Richtung des Grundkörpers (24) zu halten sucht.

8. Sitzbefestigungssystem nach einem der Ansprüche 1 bis 7, **dadurch gekennzeichnet, dass** die Rastteile (22) des Grundkörpers (24) und die weiteren Rastteile (30) des Aufsetzteils (26) in Längsrichtung dieser Teile (22,30) gesehen ein Abstandsmaß voneinander aufweisen, das dem Rasterabstandsmaß gebildet durch die Durchtrittsöffnungen (18) in der Befestigungsschiene (10) entspricht.

9. Sitzbefestigungssystem nach einem der Ansprüche 1 bis 8, **dadurch gekennzeichnet, dass** der Grundkörper (24) an seiner dem Fluggastsitz zugewandten Oberseite ein Befestigungsauge (60) aufweist zum Festlegen von Ständerteilen des Fußgestells des jeweiligen Fluggastsitzes.

## Claims

1. Seat securing system, in particular for securing air passenger seats to a floor of an aircraft, having at least one securing rail (10) which is embodied in the manner of a hollow section being provided, on its upper side (12) facing the air passenger seat, with a longitudinal duct (14) which is bounded by the free section edges (16) of the hollow section and has passage openings (18) which widen the free entry cross section of said longitudinal duct (14) in the longitudinal direction of the securing rail (10) with a predefinable modular dimension, wherein the seat securing system has a base body (24) with latching parts (22) which are arranged one behind the other in series and are spaced apart from one another, wherein the distance dimension between the latching parts (22) of the base body (24) is matched to the distance dimension between the passage openings (18), wherein, when there is a relative movement of the latching parts (22) with respect to the passage openings (18) in the longitudinal direction of the securing rail (10), the latching parts (22) can be placed in abutment with the section edges (16) of the hollow section, wherein, in addition to the base body (24), a contact part (26) to put on the securing rail (10) is provided as a further component, said contact part (26) having further latching parts (30) for engagement with the passage openings (18) which can be assigned, wherein, in a relative movement between the contact part (26) and the base body (24), said parts (24, 26) can be moved transversely with respect to the longitudinal direction of the securing rail (10) into a fixed position, and wherein in the fixed position a locking body (34) which can be pivoted from a released position into a locked position and which is under the effect of a force accumulator (32) secures the respective latching parts (22, 30) and consequently the base body (24) and contact part (26) to the securing rail (10), **characterized in that** the locking body (34) has a wedge (38) which can be pivoted in the base body (24) by means of an adjustment tappet (36) and which engages, in the released position, in a wedge groove (40) in the contact part (26), and in the locked position engages transversely with respect thereto over the abutment walls (42) which bound the wedge groove (40) at the edges.

2. Seat securing system according to Claim 1, **characterized in that**, in the released position, the force accumulator (32) relaxes and extends between the wedge (38) and a cut-out (48) in the base body (24), and **in that** the force accumulator (32) is tensioned when the locked position is assumed.

3. Seat securing system according to Claim 1 or 2, **characterized in that** the force accumulator (32) is composed of disc spring packet.

4. Seat securing system according to one of Claims 1 to 3, **characterized in that** the individual tappet (36) is additionally fixed in position in the locked position by means of a latching securement (50).

5. Seat securing system according to one of Claims 1 to 4, **characterized in that** the contact part (26) is embodied in the manner of an abutment plate which is provided with an engaging edge (54) so as to embrace the base body (24) for the relative movement between it and the contact part (26), and **in that** the abutment plate is provided on its side facing the securing rail (10) with the further latching parts (30).

6. Seat securing system according to Claim 5, **characterized in that** webs (56) on the base body (24) engage through the abutment plate and have the respective latching part (22) arranged at their free ends.

7. Seat securing system according to one of Claims 1 to 6, **characterized in that** the contact part (26) and the base body (24) are coupled to one another using a captive securing means (58) which is provided by means of a further force accumulator and attempts to hold the contact part (26) in the released position in the direction of the base body (24).

8. Seat securing system according to one of Claims 1 to 7, **characterized in that** the latching parts (22) of the base body (24) and the further latching parts (30) of the contact part (26) are at a distance dimension from one another, viewed in the longitudinal direction of said parts (22, 30), which corresponds to the modular distance dimension formed by the passage openings (18) in the securing rail (10).

9. Seat securing system according to one of Claims 1 to 8, **characterized in that** the base body (24) has, on its upper side facing the air passenger seat, an attachment eyelet (60) for securing vertical parts of the base frame of the respective air passenger seat.

## Revendications

1. Système de fixation de siège, notamment pour la fixation de sièges de passagers d'aéronefs, sur un sol d'un aéronef, comprenant au moins un rail de fixation (10) qui est réalisé sous forme de profilé creux, qui est pourvu sur son côté supérieur (12) tourné vers le siège de passager d'aéronef d'un canal longitudinal (14) limité par les flancs libres de profilé (16) du profilé creux, lequel canal longitudinal présente, dans la direction longitudinale du rail de fixation (10), dans une mesure de trame prédéfinissable, des ouvertures de passage (18) élargissant sa section transversale d'entrée libre, le système de fixation de siège présentant un corps de base (24) avec des parties d'encliquetage (22) disposées les unes derrière les autres en rangée et espacées les unes des autres, la mesure de la distance des parties d'encliquetage (22) du corps de base (24) étant adaptée à la mesure de la distance des ouvertures de passage (18), les parties d'encliquetage (22), dans le cas d'un mouvement relatif des parties d'encliquetage (22) par rapport aux ouvertures de passage (18) le long de la direction longitudinale du rail de fixation (10), pouvant être amenées en appui avec les flancs de profilé (16) du profilé creux, et en plus du corps de base (24), en tant que composant supplémentaire, une partie d'applique (26) à poser sur le rail de fixation (10) étant prévue, laquelle présente d'autres parties d'encliquetage (30) pour un engagement avec les ouvertures de passage (18) pouvant être associées, et dans le cas d'un mouvement relatif entre la partie d'applique (26) et le corps de base (24), ceux-ci (24, 26) pouvant être déplacés transversalement à la direction longitudinale du rail de fixation (10) dans une position de fixation, et dans la position de fixation, un corps de verrouillage (34) capable de pivoter d'une position de libération dans une position de verrouillage, sous l'effet d'un accumulateur de force (32), fixant les parties d'encliquetage respectives (22, 30) et avec elles le corps de base (24) et la partie d'applique (26) sur le rail de fixation (10), **caractérisé en ce que** le corps de verrouillage (34) présente une clavette (38) capable de pivoter dans le corps de base (24) au moyen d'un tourillon d'ajustement (36), laquelle vient en prise dans la position de libération dans une rainure de clavette (40) de la partie d'applique (26), et, dans la position de verrouillage, vient en prise par le dessus, transversalement à celle-ci, avec les parois d'appui (42) limitant la rainure de clavette (40) du côté marginal.

2. Système de fixation de siège selon la revendication 1, **caractérisé en ce que** dans la position de libération, l'accumulateur de force (32) détendu s'étend entre la clavette (38) et un évidement (48) dans le corps de base (24), et **en ce que** lorsque la position de verrouillage est adoptée, l'accumulateur de force (32) est tendu.

3. Système de fixation de siège selon la revendication 1 ou 2, **caractérisé en ce que** l'accumulateur de force (32) se compose d'un paquet de ressorts Belleville.

4. Système de fixation de siège selon l'une quelconque des revendications 1 à 3, **caractérisé en ce que** le tourillon d'ajustement (36) est en outre fixé en position dans la position de verrouillage par le biais d'une fixation d'encliquetage (50).

5. Système de fixation selon l'une quelconque des revendications 1 à 4, **caractérisé en ce que** la partie d'applique (26) est réalisée à la manière d'une plaque d'appui, qui est munie d'un bord périphérique (54) et qui entoure le corps de base (24) en vue du mouvement relatif entre lui et la partie d'applique (26) et **en ce que** la plaque d'appui est munie, sur son côté tourné vers le rail de fixation (10), des autres parties d'encliquetage (30).

6. Système de fixation de siège selon la revendication 5, **caractérisé en ce que** des nervures (56) du corps de base (24) s'engagent dans la plaque d'appui, la partie d'encliquetage respective (22) étant disposée à leur extrémité libre.

7. Système de fixation de siège selon l'une quelconque des revendications 1 à 6, **caractérisé en ce que** la partie d'applique (26) et le corps de base (24) sont accouplés l'un à l'autre par le biais d'une fixation imperdable (58), qui est munie d'un autre accumulateur de force pour s'efforcer de retenir dans la position de libération la partie d'applique (26) dans la direction du corps de base (24).

8. Système de fixation de siège selon l'une quelconque des revendications 1 à 7, **caractérisé en ce que** les parties d'encliquetage (22) du corps de base (24) et les autres parties d'encliquetage (30) de la partie d'applique (26), vues dans la direction longitudinale de ces parties (22, 30), présentent une mesure de distance entre elles qui correspond à la mesure de distance de la trame formée par les ouvertures de passage (18) dans le rail de fixation (10).

9. Système de fixation de siège selon l'une quelconque des revendications 1 à 8, **caractérisé en ce que** le corps de base (24) présente, sur son côté supérieur tourné vers le siège de passager d'aéronef, un oeillet de fixation (60) pour la fixation de parties de support du châssis du siège respectif de passager d'aéronef.
